Europäisches Patentamt

European Patent Office

Office européen des brevets

(19)

(11) Veröffentlichungsnummer : **0 389 497 B1**

# EUROPÄISCHE PATENTSCHRIFT

(12)

(45) Veröffentlichungstag der Patentschrift :
**13.05.92 Patentblatt 92/20**

(51) Int. Cl.$^5$ : **B60K 28/16,** B60T 8/32

(21) Anmeldenummer : **88908961.1**

(22) Anmeldetag : **05.10.88**

(86) Internationale Anmeldenummer :
**PCT/EP88/00885**

(87) Internationale Veröffentlichungsnummer :
**WO 89/04263 18.05.89 Gazette 89/11**

(54) **ANTRIEBSSCHLUPFREGELSYSTEM.**

(30) Priorität : **06.11.87 DE 3737689**

(43) Veröffentlichungstag der Anmeldung :
**03.10.90 Patentblatt 90/40**

(45) Bekanntmachung des Hinweises auf die
Patenterteilung :
**13.05.92 Patentblatt 92/20**

(84) Benannte Vertragsstaaten :
**DE FR GB IT SE**

(56) Entgegenhaltungen :
**EP-A- 0 166 258
EP-A- 0 240 174
EP-A- 0 249 335
EP-A- 0 254 943
EP-A- 0 274 397
DE-A- 3 419 716
GB-A- 2 188 996**

(73) Patentinhaber : **ROBERT BOSCH GMBH
Postfach 30 02 20
W-7000 Stuttgart 30 (DE)**

(72) Erfinder : **SIGL, Alfred
Waldeck 8
W-7126 Sersheim (DE)**
Erfinder : **MEISSNER, Manfred
Im Eichrain 33
W-7145 Unterriexingen (DE)**
Erfinder : **SCHÄFER, Jochen
Belchenweg 18
W-7140 Ludwigsburg 11 (DE)**
Erfinder : **SCHMITT, Johannes
Posener Strasse 19
W-7141 Schwieberdingen (DE)**

(74) Vertreter : **Kammer, Arno
Postfach 10 56 08 Grenzhöfer Weg 36
W-6900 Heidelberg 1 (DE)**

Jouve, 18, rue Saint-Denis, 75001 PARIS

## Beschreibung

Die Erfindung betrifft ein Antriebsschlupfregelsystem mit den Merkmalen des Oberbegriffs des Anspruchs 1.

## Stand der Technik

Es ist z.B. aus der DE-A1-3419716 bekannt bei Antriebsschlupfregelsystemen aus den nicht angetriebenen Rädern z.B. durch Mittelwertbildung eine Referenzgröße abzuleiten, die der Fahrzeuggeschwindigkeit entspricht. Weicht die Geschwindigkeit eines der Räder um einen bestimmten Prozentsatz von dieser Referenzgröße ab, so wird ein Schlupfsignal erzeugt, das eine Bremsung am zugehörigen Rad bewirkt. Tritt Durchdrehen an beiden Rädern auf, so wird zusätzlich der Motor gedrosselt.

## Aufgabe und Lösung

Der Erfindung liegt die Aufgabe zugrunde die Antriebsschlupfregelung weiter zu verbessern.

Die Aufgabe wird durch die ein Anspruch 1 angegebenen Merkmale gelöst.

Die Berücksichtung der Fahrzeugbeschleunigung verbessert dabei die Traktion, während die Einführung eines Konstanten Anteils b den Vorteil bringt, daß im Anfahrfall auch bei geringer Beschleunigung genügend Antriebsschlupf für eine optimale Traktion eingeregelt wird.

Wenn man zusätzlich gemäß Anspruch 2 noch einen weiteren Anteil zufügt, der die Fahrzeuggeschwindigkeit quadratisch berücksichtigt, so wirken sich Reifentoleranzen weniger nachteilig aus.

Im Anspruch 3 wird eine Beziehung angegeben, gemäß der der dritte Teil vorzugsweise bemessen wird

In Anspruch 4 wird ein Fahrereinfluß auf die Schlupfschwellenbildung und damit auf die Abstimmung von Traktien und Stabilität eingeführt.

Anspruch 5 führt eine Ersatzgröße für den Fahrerwunsch ein, wenn diese Information nicht verfügbar ist. Figurenbeschreibung.

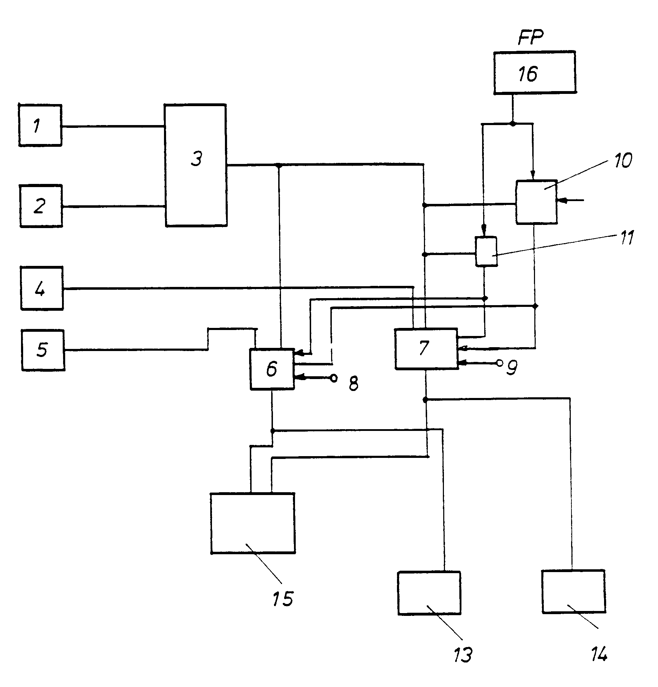

Anhand der Zeichnung wird ein Ausführungsbeispiel der Erfindung näher erläutert.

Dort sind mit 1 und 2 Meßwertgeber für die nicht angetriebenen Räder bezeichnet, deren der Radgeschwindigkeit entsprechenden Signale dem Mittelwertbildner 3 zugeführt werden. Dieser gibt eine der Fahrzeuggeschwindigkeit entsprechendes Referenzsignal ab. Mit 4 und 5 sind Meßwertgeber der angetriebenen Räder bezeichnet. Diese sind mit Blöcken 6 und 7 verbunden, denen auch die Referenzgröße zugeführt wird. In diesen Blöcken werden die zugeführten Signale miteinander verglichen, und es werden Ausgangssignale erzeugt, wenn die Radgeschwindigkeit die Referenzgeschwindigkeit um einen vorgegebenen Wert $\lambda$h überschreitet. Dieser Wert $\lambda$ ist durch folgende Beziehung gegeben:

$$\lambda = a\,V_F + b + (\frac{dV_F}{dt} - d) \cdot \frac{FP}{e} + \frac{FP}{c} \cdot (V_F)^2$$

Dabei ist FP die vom Fahrer vorgegebene Fahrpedalstellung, die zwischen 0 % und 100 % variieren kann.

Der Ausdruck $(\frac{dV_F}{dt} - d) \cdot \frac{FP}{e}$ wird dabei mit einer Beschleunigung der Dimension $\frac{m}{s^2}$ berechnet und zum weiteren Verarbeitung in $\frac{km}{h}$ umgerechnet.

Dabei kann

a zwischen 0,01 und 0,04 schwanken und z.B. 0,03 betragen,

b zwischen 0,5 und 10 km/h schwanken und z.B. 1 km/h betragen,

c zwischen $0,5 \cdot 10^{+6}$ und $5 \cdot 10^{+6}$ %$\frac{km}{h}$ schwanken,

z.B. $1 \cdot 10^{+6}$ % $\frac{km}{h}$ betragen

d zwischen 0 und 4g schwanken und z.B. 2 $\frac{m}{s^2}$ betragen und

e zwischen $\frac{1}{0,001}\frac{\%}{s}$ und $\frac{1}{0,01}\frac{\%}{s}$, z. B. $\frac{1}{0,003}\frac{\%}{s}$ betragen

Der Anteil a $V_F$ wird in den Blöcken 6 und 7 gebildet, der Summand b wird an Klemmen 8 und 9 zugeführt, der Ausdruck $\frac{dF}{dt} - d) \frac{FP}{e}$ wird in einem Differenzier- und Substraktionsblock 10 und der Ausdruck $\frac{FP}{c}(V_F)^2$ in einem Block 11 gebildet.

Überschreitet die Radgeschwindigkeit die Bezugsgröße um den oben angegebenen und damit vorgegebenen, jedoch variablen Wert, so wird jeweils ein Steuersignal erzeugt und die zugehörige Bremsen 13 oder 14 z.B. durch Einsteuern von Druck betätigt. Geben die Blöcke 6 oder 7 ein Steuersignal ab, so wird das Motormoment zurückgenommen, was durch einen Block 15 angedeutet ist.

**Patentansprüche**

1. Antriebsschlupfregelsytem enthaltend einen Schlupfregelkreis, der aus Radgeschwindigkeitssignalen der nicht angetriebenen Räder eine dem Fahrzeuggeschwindigkeitsverlauf entsprechende Referenzgröße $V_F$ bildet, zu der die Meßwertgebersignale der angetriebenen Rädern in Beziehung gesetzt werden, wobei ein Steuersignal zur Beeinflussung der Radbremsen und/oder des Motordrehmoments gebildet wird, wenn wenigstens eines der von den angetriebenen Rädern abgeleiteten Meßwertgebersignale die Referenzgröße um einen vorgegebenen Wert λ, der von der Referenzgröße abhängig ist, übersteigt, dadurch gekennzeichnet, daß der Wert außer einem prozentualen Anteil a der Referenzgröße (in 6 und 7) einen zweiten (bei 8 und 9) und dritten Anteil (in 10) aufweist, wobei der zweite Anteil ein konstanter Betrag (b) und der dritte Anteil von der Fahrzeugbeschleunigung ($\frac{dV_F}{dt}$) abhängig ist

2. Antriebsschlupfregelsystem nach Anspruch 1, dadurch gekennzeichnet, daß der Schlupfwert einen zusätzlichen Anteil aufweist, der quadratisch von der Referenzgröße ($V_F$) abhängt (in 11).

3. Antriebsschlupfregelsystem nach Anspruch 1 oder 2, dadurch gekennzeichnet, daß der dritte Anteil durch die Beziehung ($\frac{dV_F}{dt} - d) \cdot \frac{1}{e}$ (in 11) gebildet ist, wobei d ein Konstanter Beschleunigunggsbetrag und e ein konstanter Wert ist.

4. Antriebsschlupfregelung nach einem der Amsprüche 1 bis 3, dadurch gekennzeichnet, daß der Fahrerwunsch (z.B. in Form der Fahrpedalstellung FP aus 16) bei der Bildung der Schlupfschwellen additiv oder multiplikativ berücksichtigt wird.

5. Antriebsschlupfregelsystem nach Anspruch 4, dadurch gekennzeichnet, daß (anstelle des Fahrerwunsches) die momentane Drosselklappenstellung berücksichtigt wird.

**Claims**

1. Drive slip control system containing a slip control circuit which, from wheel speed signals of the non-drivenwheels, forms a reference parameter $V_F$ corresponding to the course of the vehicle velocity, to which are related the measurement pick-up signals of the driven wheels, a control signal for influencing the wheel brakes and/or the engine torque being formed when at least one of the measurement pick-up signals derived from the driven wheels exceeds the reference parameter by a specified value λ, which depends on the reference parameter, characterised in that apart from a percentage portion a of the reference parameter (in 6 and 7), the value has a second portion (at 8 and 9) and a third portion (in 10), the second portion being a constant amount (b) and the third portion depending on the vehicle acceleration ($dV_F/dt$).

2. Drive slip control system according to Claim 1, characterised in that the slip value has an additional portion which depends on the square of the reference parameter ($V_F$) (in 11).

3. Drive slip control system according to Claim 1 or 2, characterised in that the third portion is formed by the relationship (($dV_F/dt) - d) \cdot 1/e$ (in 11), where d is a constant acceleration amount and e is a constant value.

4. Drive slip control system according to one of Claims 1 to 3, characterised in that the driver's wish (in the form of the accelerator pedal acceleration FP from 16, for example) is taken into account additively or multiplicatively in the formation of the slip thresholds.

5. Drive slip control system according to Claim 4, characterised in that the instantaneous chrottle butterfly position is taken into account (instead of the driver's wish).

**Revendications**

1. Système de régulation de glissement à l'entraînement comportant un circuit de régulation de glissement qui forme une grandeur de référence $V_F$ correspondant au profil de la vitesse du véhicule, en utilisant les signaux de vitesse des roues non motrices, cette grandeur de référence étant mise en relation avec les signaux du capteur de valeur de mesure des roues motrices en formant un signal de commande pour influencer le freinage de roue et/ou le couple moteur, au moins l'un des signaux de capteur de mesure provenant des roues motrices dépassant la grandeur de référence d'une valeur prédéterminée λ dépendant de la grandeur de référence, système caractérisé en ce que la grandeur comporte en plus d'une partie en pourcentage a de la grandeur de référence (dans 6 et 7), une seconde partie (en 8 et 9) et une troisième partie (en 10), la seconde partie étant une valeur constante (b) et la troisième partie dépendant de l'accélération du véhicule($\frac{dV_F}{dt}$).

2. Système de régulation de glissement à l'entraînement selon la revendication 1, caractérisé en ce que le coefficient de glissement présente une partie supplémentaire qui dépend du carré de la grandeur de référence ($V_F$) (dans 11).

3. Système de régulation de glissement à l'entraînement selon la revendication 1 ou 2, caractérisé en ce que la troisième partie est formée (dans 11) par la relation ($\frac{dV_F}{dt}$ - d) · $\frac{1}{e}$ relation dans laquelle d est une valeur constante de l'accélération et e une valeur constante.

4. Système de régulation de glissement à l'entraînement selon l'une des revendications 1 à 3, caractérisé en ce que le souhait du conducteur (par exemple sous la forme de la position FP de la pédale d'accélération en 16) est prise en compte par addition ou multiplication pour former le seuil de glissement.

5. Système de régulation anti-glissement selon la revendication 4, caractérisé en ce que (à la place du souhait du conducteur) on tient compte de la position instantanée du papillon d'étranglement du carburateur.